Europäisches Patentamt

(19) European Patent Office

Office européen des brevets

(11) Veröffentlichungsnummer: **0 191 000**
**B1**

## (12) EUROPÄISCHE PATENTSCHRIFT

(45) Veröffentlichungstag der Patentschrift:
**12.07.89**

(21) Anmeldenummer: **86810057.9**

(22) Anmeldetag: **03.02.86**

(51) Int. Cl.⁴: **B23K 7/10, B23K 9/00,**
**G01B 7/00, G01B 7/14**

(54) Messanordnung mit einer kapazitiven Messelektrode und Bearbeitungs-Werkzeug mit integrierter Elektrode.

(30) Priorität: **08.02.85 CH 581/85**

(43) Veröffentlichungstag der Anmeldung:
**13.08.86 Patentblatt 86/33**

(45) Bekanntmachung des Hinweises auf die Patenterteilung:
**12.07.89 Patentblatt 89/28**

(84) Benannte Vertragsstaaten:
**AT CH DE FR GB IT LI SE**

(56) Entgegenhaltungen:
**EP-A- 0 007 034**
**DE-A- 2 556 218**
**DE-A- 2 641 851**
**GB-A- 2 064 135**
**US-A- 3 809 308**
**US-A- 3 970 911**

(73) Patentinhaber: **GET Gesellschaft für**
**Elektronik-Technologie mbH, Klingenbergstrasse 16,**
**D-4930 Detmold(DE)**

(72) Erfinder: **Schmall, Karl-Heinz, Waldstrasse 20,**
**D-7570 Baden-Baden 19(DE)**

(74) Vertreter: **Hepp, Dieter et al, HEPP & Partner AG**
**Marktgasse 18, CH-9500 Wil(CH)**

ACTORUM AG

## Beschreibung

Die Erfindung betrifft eine Messanordnung mit einer kapazitiven Mess-Elektrode zum berührungslosen Messen des Abstands zwischen einem metallischen Werkstück und einem thermischen Bearbeitungs-Werkzeug, durch welches Material geschmolzen, verbrannt oder verdampft wird, insbesondere zum Schweissen, Brennschneiden oder Plasma-Schneiden, gemäss Oberbegriff von Anspruch 1.

Messanordnungen mit einer kapazitiven Messelektrode sind in den verschiedensten Ausführungsformen bekannt und gebräuchlich und z.B. in den folgenden Vorpublikationen der Anmelderin beschrieben:

DE-OS 2 726 648 (AT: 14. 6. 77), DE-OS 2 829 851 (AT: 7. 7. 78), DE-OS 2 747 539 (AT: 22. 10. 77) sowie CH-PS 641 989 (AT: 20. 12. 79).

Solche Messanordnungen werden für die verschiedensten thermischen Bearbeitungsverfahren eingesetzt. Dabei handelt es sich insbesondere um Schweiss- und Trennverfahren der verschiedensten Art mit Energiezufur z.B. durch Gas (Flamm-, Brenn- oder Schweiss-Verfahren), elektrischen Strom (Plasma-Verfahren) oder auch Laserstrahlen.

Bekanntlich basieren solche Messanordnungen darauf, dass die Kapazität zwischen einer Mess-Elektrode und dem zu bearbeitenden Werkstück als Grundlage zur Gewinnung von Signalen verwendet wird, welche dem Abstand entsprechen. Der Kapazitätswert ist nämlich direkt abhängig vom Kapazitätswert zwischen Elektrode und Werkstück.

Der Kapazitätswert ergibt sich aus der Formel:

$$C = 0{,}0884 \times \frac{A \times \varepsilon}{a} \quad [\mathrm{pF}]$$

C = Kapazität (pF/Pico Farad)
A = wirksame Fläche der Elektrode (cm²)
a = Abstand Elektrode zu Werkstück
ε = Dielektrizitätskonstante (epsilon)

Bei konstruktiv vorgegebener Elektroden-Fläche A ist der Kapazitäts-Wert ersichtlicherweise sowohl vom Abstand Elektrode–Werkstück als auch von der Dielektrizitätskonstante abhängig.

In der DE-A 2 556 218 ist eine Messanordnung vorgeschlagen worden, in der neben einer kapazitiven Mess-Elektrode eine kapazitive Kompensations-Elektrode angeordnet ist, wobei die von der Kompensations-Elektrode abgeleiteten Signale den von der Mess-Elektrode abgeleiteten Signalen gegengekoppelt werden, wenn sich die beiden Elektroden über den Rand des Werkstückes hinaus erstrecken. In einem solchen Fall ist die wirksame Fläche der Elektroden nicht mehr gleich der gesamten jeweiligen Elektroden-Fläche, sondern abhängig vom Rand-Abstand des Werkzeuges, mit dem die Elektroden verbunden sind. Durch die Gegenkopplung der Kompensations-Signale soll trotzdem der richtige Abstand zwischen Werkstück und Werkzeug ermittelt werden, indem dafür gesorgt ist, dass die Differenz zwischen den wirksamen Flächen der beiden Elektroden stets gleich bleibt, unabhängig vom Rand-Abstand des Werkzeuges.

Bei thermischen Bearbeitungs-Werkzeugen kommt es nun vor, dass sich während des Bearbeitungsvorgangs die Dielektrizitätskonstante ändert. Dies tritt z.B. ein, wenn die Luft ionisiert wird oder wenn Metalldampf-Wolken zwischen dem Werkstück und einer Elektrode entstehen. Solche Änderungen der Dielektrizitätskonstante (die trotz gleichem Abstand a zu einer Kapazitätsänderung führen) bewirken Messfehler bei der Abstandsermittlung und/oder unruhige Abstandsregelung.

Solche Messfehler können in der Messanordnung gemäss der genannten DE-A 2 556 218 nicht kompensiert werden, denn dort ist es zwingend, dass eine Änderung des Abstands beide Elektroden prozentual gleich beeinflusst.

Der Erfindung liegt die neue Aufgabe zugrunde, eine Messanordnung zu schaffen, durch welche Änderungen der Dielektrizitätskonstante kompensiert werden können, so dass der tatsächliche Abstand zwischen Werkstück und Werkzeug unabhängig von der Dielektrizitätskonstante ermittelt werden kann.

Erfindungsgemäss wird diese Aufgabe gemäss Anspruch 1 gelöst.

Jede Änderung der Dielektrizitätskonstante, z.B. durch Metalldämpfe oder Ionisierung bewirkt offensichtlich eine Veränderung des Kapazitäts-Werts sowohl der Mess-Elektrode als auch der Kompensations-Elektrode. Durch die Gegenkopplung werden diese Störsignale jedoch kompensiert. Auf der anderen Seite wirkt sich eine Veränderung des Abstands zwischen den beiden Elektroden und dem Werkstück im Hinblick auf eine Kapazitätsveränderung bei der Mess-Elektrode anders aus als bei der Kompensations-Elektrode.

Wenn der Abstand $a_1$ der Messelektrode zum Werkstück( z.B. 5 cm beträgt und der Abstand $a_2$ z.B. 7 cm, dann führt eine Annäherung um $\Delta a$ von 1 cm gemäss der Formel

$$C \triangleq \frac{A \cdot \varepsilon}{a}$$

zu einer Vergrösserung des Mess-Kapazitätwerts $C_M$ von 5 : 4 während der Kompensations-Kapazitätswert $C_K$ sich nur um den Faktor 7 : 6 vergrössert. Aus dieser unterschiedlichen Veränderung der Kapazitätswerte lässt sich durch die Gegenkopplung die Abstandsänderung ohne weiteres ermitteln.

Praktisch lässt sich die Erfindung besonders einfach realisieren, wenn die Kompensations-Elektrode und die Mess-Elektrode als frequenzbeeinflussender Teil je eines LC-Kreises vorgesehen sind, wenn je eine Anordnung zum Umwandeln der Frequenzänderungen in Gleichstrom-Mess-Signale und Gleichstrom-Kompensations-Signale mit den Ausgangssignalen der LC-Kreise gespeist wird, und wenn eine Anordnung zum Gegenkoppeln der Gleichstrom-Signale vorgesehen ist. Eine solche Anordnung ist besonders unempfindlich für Störspannungs-Einflüsse oder Aufladungen im Elektroden-Bereich, weil die Änderung der Elektroden-Kapazitäten in Frequenzänderungen umgewandelt wird, woraus sich von Störspannungen unabhängige Signalverarbeitung ergibt. Die Schaltung zur Umwandlung der Frequenzänderungen in Gleichstrom-Mess-Signale sowie die Anordnung zum Gegenkoppeln der Gleichstrom-Signale lassen sich auf einfache Weise im Abstand vom BearbeitungsWerkzeug und damit ausserhalb der Störspannungs-Einflüsse abgeschirmt anordnen. Besonders gute Ergebnisse lassen sich dabei erzielen, wenn der LC-Kreis (in den die Kompensations-Elektrode bzw. die Mess-Elektrode einbezogen ist) das frequenzbestimmende Bauteil je eines Oszillators ist. Durch Wahl der Oszillator-Frequenzen lassen sich dabei die beiden Kreise zuverlässig voneinander trennen, während nach der Umwandlung der Frequenzänderungen in Gleichstrom-Signale, vorzugsweise durch einen Diskriminator, die gewünschte Gegenkopplung und Störgrössen-Kompensation durch Gegeneinanderschaltung der Ausgänge der beiden Diskriminatoren einfach möglich ist.

Besonders gleichmässige Beeinflussung von Mess-Elektrode und Kompensations-Elektrode durch Schwankungen der Dielektrizitätskonstanten lassen sich erreichen, wenn Mess-Elektrode und Kompensations-Elektrode das Bearbeitungs-Werkzeug ringartig umgeben, und wenn der Aussendurchmesser der Kompensations-Elektrode grösser ist als der Aussendurchmesser der Mess-Elektrode.

Bei Bearbeitungsvorgängen, bei denen Metall gegen das Bearbeitungs-Werkzeug spritzt, wie dies z.B. beim Anfahren von Brennschneidanlagen besonders der Fall ist, ist es vorteilhaft, wenn die Kompensations-Elektrode und/oder die Mess-Elektrode lochscheibenartig um das Bearbeitungs-Werkzeug angeordnet sind, wobei die Scheiben-Flächen vom Bearbeitungs-Werkzeug weg unter einem Winkel von weniger als 90° zur Längsachse des Bearbeitungs-Werkzeugs verlaufen. Dadurch lässt sich erreichen, dass solche Metallteilchen und auch Gaswolken ungehindert und möglichst schnell aus dem Bereich zwischen Elektroden und Werkstück entweichen können, ohne die Elektroden zu verschmutzen und deren Kapazitäts-Wert zu beeinflussen. Besonders vorteilhafte Ergebnisse werden dabei erreicht, wenn der Winkel der Scheiben-Oberfläche, an der dem Werkstück zugewandten Seite, zwischen 75° und 45° beträgt.

Vor allem bei Plasma-Schneidanlagen hat sich ein Bearbeitungs-Werkzeug mit integrierter Elektrode bewährt, bei dem das Bearbeitungs-Werkzeug an seinem dem Werkstück zugewandten Ende mit einem kegelstumpfartig ausgebildeten Abschlussteil versehen ist, wobei das Abschlussteil gegenüber dem Bearbeitungs-Werkzeug und/oder das Bearbeitungs-Werkzeug gegenüber Masse isoliert und mit kleiner Kapazität angeordnet ist, so dass das Abschlussteil des Bearbeitungs-Werkzeugs selbst als Mess-Elektrode ausgebildet werden kann. In diesem Fall lässt sich die Kompensations-Elektrode ringartig um das Abschlussteil anordnen. Die Befestigung des Abschlussteils am Bearbeitungs-Werkzeug erfolgt vorteilhaft mittels eines Isolations-Zwischenstücks, so dass sich durch entsprechende Dimensionierung ein kleiner Kapazitäts-Wert zwischen dem Abschlussteil und dem Bearbeitungs-Werkzeug ergibt. Besonders vorteilhaft lässt sich das Isolations-Zwischenstück als Keramikteil ausbilden.

Die Erfindung ist im folgenden in Ausführungsbeispielen anhand der Zeichnungen näher erläutert. Es zeigen:

Figur 1 die schematische Darstellung einer Messanordnung mit den Merkmalen der Erfindung,

Figur 2 die Detail-Darstellung von Elektroden in abgewandelter Ausführung,

Figur 3 einen Längsschnitt durch die Anordnung gemäss Figur 2,

Figur 4 eine abgewandelte Elektroden-Anordnung,

Figur 5 den Signalverlauf an ausgewählten Punkten der Schaltung gemäss Figur 1,

Figur 6 eine in ein Bearbeitungs-Werkzeug integrierte Mess-Elektrode.

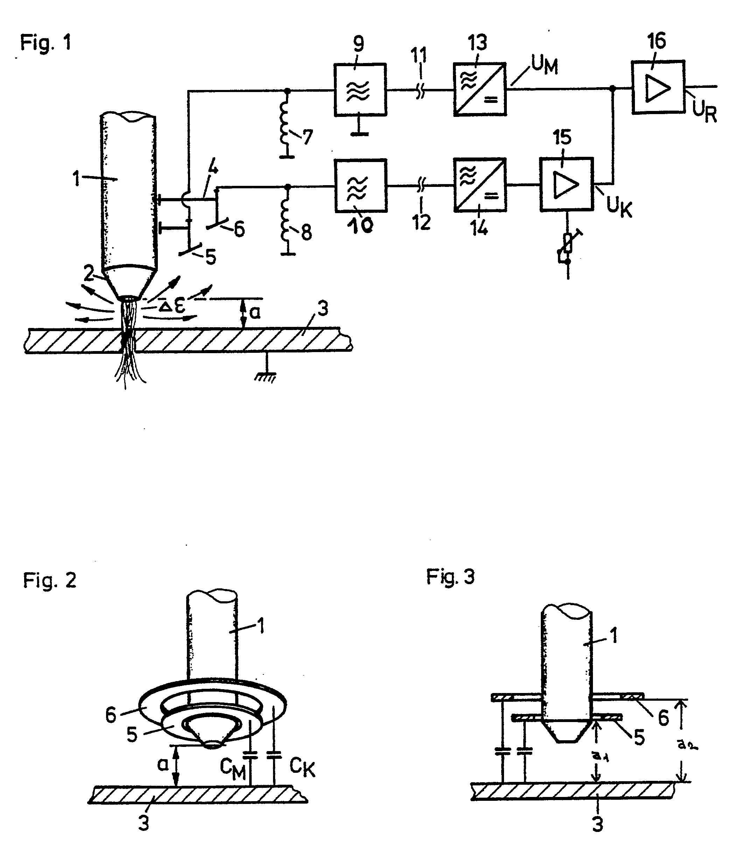

Gemäss Figur 1 ist als Bearbeitungs-Werkzeug 1 die Brennerdüse 2 einer automatischen Brennschneidanlage (nicht dargestellt) gezeigt. Die Brennerdüse 2 wird durch eine automatische Vorschub-Einrichtung über einem Werkstück 3 bewegt, das eine zu schneidende Stahlplatte ist. Das Werkstück 3 ist geerdet. An der Brennerdüse 2 sind mittels Halterungen 4 aus Isolationsmaterial eine Mess-Elektrode 5 und eine Kompensations-Elektrode 6 befestigt. Die Kapazität zwischen dem Werkstück 2 und den Elektroden 5 und 6 wird sowohl durch den Abstand zwischen Brennerdüse 2 und Werkstück 3 bestimmt, als auch durch Änderungen der Dielektrizitätskonstante $\Delta\varepsilon$ des zwischen den Elektroden 5 und 6 und dem Werkstück 3 befindlichen Mediums beeinflusst. Während des Bearbeitungsvorgangs können Metalldämpfe und Metallpartikel vom Werkstück 3 losgerissen werden und in den Raum zwischen den Elektroden 5, 6 und dem Werkstück 3 gelangen. Dies bewirkt eine Änderung der Dielektrizitätskonstante und damit eine Veränderung des Werts der Kapazität zwischen den Elektroden 5 bzw. 6 und dem Werkstück 3.

Die Elektroden 5 und 6 sind je Teil eines LC-Kreises, der Spulen 7 und 8 aufweist. Die LC-Kreise 5, 7 und 6, 8 sind als frequenzbestimmende Bauteile an die Oszillatoren 9 und 10 angeschlossen. Jede Abstandsveränderung zwischen den Elektroden 5, 6 und dem Werkstück 3 sowie jede Änderung der Dielektrizitätskonstante Epsilon führt deshalb ersichtlicherweise zu einer Änderung der Frequenz der Oszillatoren 9 und 10. Mittels Koaxialkabeln 11, 12 werden die Ausgangssignale der Oszillatoren 9, 10 an je einen Diskriminator 13 und 14 geleitet. Die Diskriminatoren 13, 14 sind dabei so ausgelegt, dass sie kein Gleichspannungssignal abgeben, sofern die Oszillatoren 9, 10 auf der jeweiligen Sollfrequenz schwingen. Tritt eine positive Frequenzabweichung auf, liegt am Ausgangssignal jeweils ein positiver Spannungswert an, bei negativer Frequenzabweichung wird ein negatives Signal abgegeben. An den Ausgang des Oszillators 14 ist eine Invertier-Schaltung 15 angeschlossen, welche die positiven Ausgangssignale des Oszillators 14 in negative und die negativen Ausgangssignale in positive Signale umwandelt. Ausserdem lässt sich der Verstärkungsfaktor der Invertier-Schaltung 15 zum Abgleich der Gesamtanordnnng einstellen.

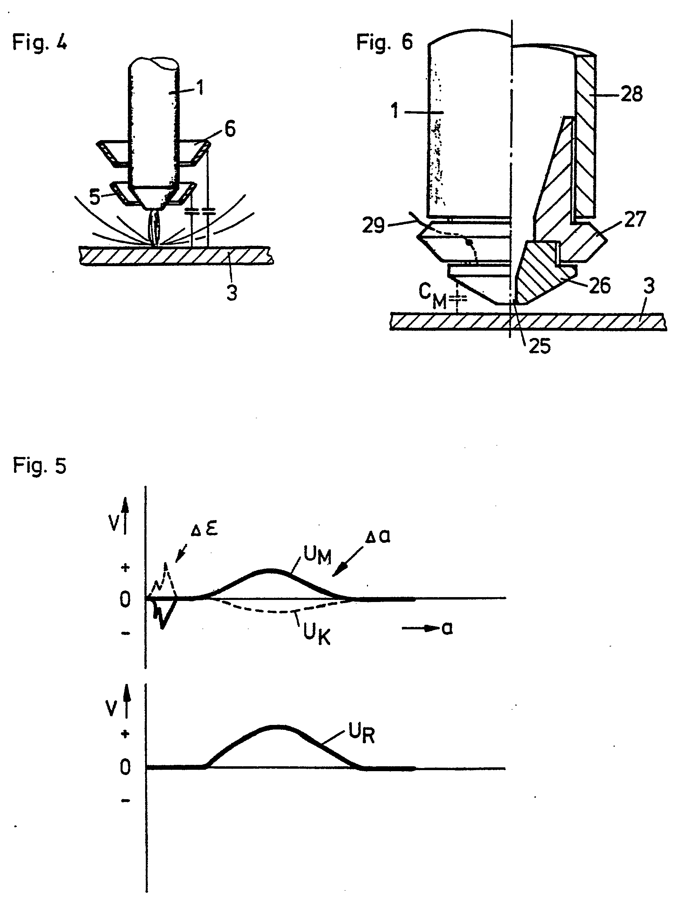

Da beide Elektroden 5 und 6 praktisch gleichmässig beeinflusst werden, wenn sich infolge von ionisierten Gasen oder Metalldämpfen die Dielektrizitätskonstante ändert, bewirkt eine dadurch entstehende Frequenzänderung der Oszillatoren 9 und 10 jeweils gleich grosse, jedoch in der Polarität entgegengerichtete Signale $U_M$ (am Ausgang des Oszillators 13 bzw. $U_K$ am Ausgang der Invertier-Schaltung 15). Wie in Figur 5 schematisch dargestellt, kompensieren sich dabei die bei "$\Delta\varepsilon$" gezeigten Störspannungen. Kapazitätsänderungen der Elektroden 5 und 6 durch Schwankungen der Dielektrizitätskonstante führen also nicht zu Ausgangssignalen $U_R$ am Regelverstärker 16.

Wie dargestellt, ist der Abstand $a_2$ der Kompensations-Elektrode 6 zum Werkstück 3 grösser als der Abstand $a_1$ der Mess-Elektrode 5 (Fig. 3). Abstandschwankungen $\Delta a$ beeinflussen also die Kapazitätswerte der beiden Elektroden 5, 6 unterschiedlich, so dass auch die Verstimmung der Oszillatoren 9 und 10 durch Abstandsänderungen unterschiedlich ist. Dementsprechend ergeben Änderungen des Abstands am Ausgang des Diskriminators 13 bzw. der Invertierschaltung 15 zwar ebenfalls Signale entgegengesetzter Polarität, jedoch unterschiedlicher Amplitude. Wie in Figur 5 schematisch dargestellt, führt deshalb eine Veränderung $\Delta a$ am Ausgang des Regelverstärkers 16 zu einem in bekannter Weise verwertbaren Signal $U_R$ zur Abstandsregelung und/oder Anzeige.

Während die Elektroden 5 und 6 gemäss Figur 1 scheibenförmig neben dem Bearbeitungs-Werkzeug 1 angeordnet sind, zeigen Figur 2 und 3 kreisringförmige Elektroden 5, 6, die zur Abstandsüberwachung im Ringraum um das Bearbeitungs-Werkzeug 1 herum besser geeignet sind als die seitlich angeordneten Elektroden 5, 6 gemäss Figur 1. Die Kompensations-Elektrode 6 ist dabei, wie beim Ausführungsbeispiel gemäss Figur 1, weiter vom Werkstück 3 entfernt als die Mess-Elektrode 5. Ausserdem steht sie seitlich derart über die Mess-Elektrode 5 vor, dass diese die Kapazität gegenüber dem Werkstück 3 nicht beeinflusst.

Die Elektroden 5, 6 gemäss Figur 4 sind ähnlich ausgebildet wie die Ring-Elektroden gemäss Figur 2 und 3. Um jedoch vom Werkstück 3 wegspritzende Metallpartikel, Gasdämpfe und dergleichen schnell entweichen zu lassen und eine Verschmutzung der Elektroden-Oberfläche zu verhindern, sind die Elektroden gemäss Figur 6 unter einem Winkel von ca. 45° zur Achse des Bearbeitungs-Werkzeugs 1 geneigt. Gegenüber den schräg vom Werkstück 3 wegspritzenden Teilchen bieten die derart konisch ausgebildeten Elektroden 5 und 6 nur einen relativ geringen Widerstand mit den nach unten gerichteten Stirnflächen.

Figur 6 zeigt ein Bearbeitungs-Werkzeug 1, bei welchem ein Laserstrahl (nicht dargestellt) in bekannter Weise zum Schneiden eines Werkstücks 3 verwendet wird. Im Bearbeitungs-Werkzeug 1 wird der Laserstrahl durch eine Bohrung 25 in einem Abschlussteil 26 gegen das Werkstück 3 gelenkt.

Das Abschlussteil 26 ist mittels eines Keramikrings 27 an einem Mantelrohr 28 isoliert befestigt. Im Keramikteil 27 ist eine Zuleitung 29 geführt. Das Abschlussteil 26 besteht aus Kupfer und bildet auf Grund der isolierten Anordnung zusammen mit dem Werkstück 3 die Messkapazität $C_M$. Die nicht dargestellte Kompensations-Elektrode 6 ist analog dem Ausführungsbeispiel gemäss Figur 4 konzentrisch um den Keramikring 27 in grösserem Abstand zum Werkstück 3 angeordnet als das Abschlussteil 26.

**Patentansprüche**

1. Messanordnung zum berührungslosen Messen des Abstands (a) zwischen einem metallischen Werkstück (3) und einem thermischen Bearbeitungswerkzeug (1, 2), durch welches Material geschmolzen, verbrannt oder verdampft wird, insbesondere zum Schweissen, Brennschneiden oder Plasmaschneiden, mit einer kapazitiven Messelektrode (5, 26) und einer kapazitiven Kompensationselektrode (6) welche im Bereich der Hitzeentwicklung an dem Bearbeitungswerkzeug (1, 2) angeordnet sind, wobei die von der Kompensationselektrode (6) abgeleiteten Abstandssignale den von der Messelektrode (5, 26) abgeleiteten Messignalen gegengekoppelt sind, dadurch gekennzeichnet, dass die Messelektrode (5, 26) und die Kompensationselektrode (6) mit derart unterschiedlichen Abständen ($a_1$, $a_2$) zum Werkstück (3) angeordnet sind, dass ihre jeweiligen Kapazitätswerte ($C_M$ bzw. $C_K$) gemäss der Formel

$$C \triangleq \frac{A \cdot \varepsilon}{a}$$

bei einer Änderung ihrer Dielektrizitätskonstante ($\varepsilon$) sich proportional ändern, bei einer Änderung des Abstands (a) jedoch sich nicht umgekehrt proportional ändern ($a_1 \pm \Delta a$ bzw. $a_2 \pm \Delta a$), wobei A die wirksame Elektroden- bzw. Kondensatorfläche ist, dass die Messelektrode (5, 26) und die Kompensationselektrode (6) jeweils Teil eines LC-Kreises ($C_M$, 7 bzw. $C_K$, 8) sind, die als frequenzbestimmendes Element je eines Oszillators (9 bzw. 10) geschaltet sind, und dass die Ausgänge der Oszillatoren (9 bzw. 10) mit je einem Frequenz-Gleichstromwandler (13 bzw. 14) verbunden sind, deren Ausgänge mit einer Anordnung (15, 16) zum Gegenkoppeln der Gleichstromsignale verbunden sind.

2. Messanordnung nach Anspruch 1, dadurch gekennzeichnet, dass der Frequenz-Gleichstromwandler (13 bzw. 14) ein Diskriminator ist.

3. Messanordnung nach Anspruch 1 oder 2, dadurch gekennzeichnet, dass die Messelektrode (5, 26) und die Kompensationselektrode (6) das Bearbeitungswerkzeug (1, 2) ringförmig umgeben.

4. Messanordnung nach Anspruch 3, dadurch gekennzeichnet, dass der Aussendurchmesser der Kompensationselektrode (6) grösser ist als der Aussendurchmesser der Messelektrode (5, 26).

5. Messanordnung nach Anspruch 3 oder 4, dadurch gekennzeichnet, dass die Kompensationselektrode (6) und/oder die Messelektrode (5, 26) lochscheibenartig um das Bearbeitungswerkzeug (1, 2) angeordnet sind, wobei die Scheibenfläche vom Bearbeitungswerkzeug weg unter einem Winkel von weniger als 90° zur Längsachse des Bearbeitungswerkzeugs verläuft.

6. Messanordnung nach Anspruch 5, dadurch gekennzeichnet, dass die Scheibenfläche unter einem Winkel geneigt ist, der kleiner als 75° ist und vorzugsweise zwischen 75° und 45° beträgt.

7. Messanordnung nach einem der vorangehenden Ansprüche, dadurch gekennzeichnet, dass die Messelektrode als Abschlussteil (26) ausgebildet ist, welches am thermischen Bearbeitungswerkzeug (1, 2) an dessen dem Werkstück (3) zugewandten Ende, befestigbar ist und dass das Abschlussteil gegenüber dem Bearbeitungswerkzeug und/oder das Bearbeitungswerkzeug gegenüber Masse isoliert und mit kleiner Kapazität angeordnet ist.

8. Messanordnung nach Anspruch 7, dadurch gekennzeichnet, dass das Abschlussteil (26) mit einem Isolationszwischenstück (27) versehen ist, wobei letzteres am Bearbeitungswerkzeug (1, 2) befestigbar ist.

9. Messanordnung nach Anspruch 8, dadurch gekennzeichnet, dass das Isolationszwischenstück (27) ein Keramikteil ist.

**Revendications**

1. Dispositif de mesure servant à réaliser la mesure, sans contact, de la distance (a) entre une pièce métallique (3) à façonner et un outil de façonnage thermique (1, 2), à l'aide duquel on fait fondre, on brûle ou on évapore un matériau, notamment pour le soudage, le découpage au chalumeau ou le découpage au jet de plasma, comportant une électrode de mesure capacitive (5, 26) et une électrode de compensation capacitive (6), qui sont disposées dans la zone du développement de chaleur, à proximité de l'outil de façonnage (1, 2), les signaux de distance, délivrés par l'électrode de compensation (6), étant accouplés par contre-réaction aux signaux de mesure délivrés par l'électrode de mesure (5, 26), caractérisé en ce que l'électrode de mesure (5, 26) et l'électrode de compensation (6) sont disposées, par rapport à la pièce à façonner (3), à des distances différentes ($a_1$, $a_2$) telles que leurs valeurs capacitives respectives ($C_M$ ou $C_K$) varient proportionnellement conformément à la formule

$$C \triangleq \frac{A \cdot \varepsilon}{a}$$

dans le cas d'une variation de leur constante diélectrique ($\varepsilon$), mais ne varient par d'une manière inversement proportionnelle dans le cas d'une variation de la distance (a) ($a_1 \pm \Delta a$ ou $a_2 \pm \Delta a$), A représentant la surface active de électrodes ou du condensateur, en ce que l'électrode de mesure (5, 26) et l'électrode de compensation (6) font partie chacune d'un circuit LC ($C_M$, 7 ou $C_K$, 8), où l'électrode est branchée comme élément de détermination de la fréquence d'un oscillateur respectif (9 et 10), et en ce que les sorties des oscillateurs (9 et 10) sont reliées à des convertisseurs respectifs de fréquence en courant continu (13 et 14), dont les sorties sont raccordées à un dispositif (15, 16) servant à réaliser le couplage par contre-réaction des signaux à courant continu.

2. Dispositif de mesure selon la revendication 1, caractérisé en ce que le convertisseur de fréquence en courant continu (13, 14) est un discriminateur.

3. Dispositif de mesure selon la revendication 1 ou 2, caractérisé en ce que l'électrode de mesure (5, 26) et l'électrode de compensation (6) entourent, sous une forme annulaire, l'outil de façonnage (1, 2).

4. Dispositif de mesure selon la revendication 3, caractérisé en ce que le diamètre extérieur de l'électrode de compensation (6) est supérieur au diamètre extérieur de l'électrode de mesure (5 , 26).

5. Dispositif de mesure selon la revendication 3 ou 4, caractérisé en ce que l'électrode de compensation (6) et/ou l'électrode de mesure (5, 26) sont disposées, sous forme de disques perforés, autour de l'outil de façonnage (1, 2), la surface des disques s'écartant de l'outil de façonnage en faisant un angle inférieur à 90° par rapport à l'axe longitudinal de l'outil de façonnage.

6. Dispositif de mesure selon la revendication 5, caractérisé en ce que la surface des disques est inclinée sous un angle inférieur à 75°, compris de préférence entre 75° et 45°.

7. Dispositif de mesure selon l'une des revendications précédentes, caractérisé en ce que l'électrode de mesure est réalisée sous la forme d'un élément d'extrémité (26) qui est fixé à l'outil de façonnage thermique (1, 2) au niveau de son extrémité tournée vers la pièce à façonner (3), et en ce que l'élément d'extrémité est isolé par rapport à l'outil de façonnage et/ou l'outil de façonnage est isolé par rapport à la masse et présente une faible capacité.

8. Dispositif de mesure selon la revendication 7, caractérisé en ce que l'élément d'extrémité (26) comporte un élément intercalaire isolant (27), qui peut être fixé sur l'outil de façonnage (1, 2).

9. Dispositif de mesure selon la revendication 8, caractérisé en ce que l'élément intercalaire isolant (27) est une pièce en céramique.

**Claims**

1. A measuring arrangement for the contactless measurement of the distance (a) between a metal workpiece (3) and a thermal machine tool (1, 2), by means of which material is melted, burned or vaporized, in particular for welding, flame cutting or plasma are cutting, with a capacitive measuring electrode (5, 26) any a capacitive compensating electrode (6), which are disposed in the region of heat generation on the machine tool (1, 2), the distance signals derived from the compensating electrode (6) being countercoupled to the measurement signals derived from the the measuring electrode (5, 26), characterised in that the measuring electrode (5, 26) and the compensating electrode (6) are arranged with different distances ($a_1$, $a_2$) from the workpiece (3) such that their respective capacitance values ($C_M$ or $C_K$) change proportionally according to the formula

$$C \triangleq \underline{\frac{A \cdot \varepsilon}{a}}$$

in the case of a change of their dielectric constant ($\varepsilon$), but in the case of a change of the distance (a) do not change inversely proportionally ($a_1 \pm \Delta a$ or $a_2 \pm \Delta a$), A being the active electrode surface or condenser surface, in that the measuring electrode (5, 26) and the compensating electrode (6) are each part of an LC-circuit ($C_M$, 7 or $C_K$, 8) which are connected as the frequency-determining element of one oscillator (9, 10) in each case, and in that the outputs of the oscillators (9 or 10) are connected to one frequency DC transformer (13, 14) in each case, whose outputs are connected to an arrangement (15, 16) for countercoupling the DC signals.

2. A measuring arrangement according to claim 1, characterised in that the frequency DC transformer, (13, 14) is a discriminator.

3. A measuring arrangement according to claim 1 or 2, characterised in that the measuring electrode (5, 26) and the compensating electrode (6) surround the machine tool (1, 2) in an annular manner.

4. A measuring arrangement according to claim 3, characterised in that the outer diameter of the compensating electrode (6) is greater than the outer diameter of the measuring electrode (5, 26).

5. A measuring arrangement according to claim 3 or 4, characterised in that the compensating electrode (6) and/or the measuring electrode (5, 26) are mounted around the machine tool (1, 2) like a pierced disk, the disk face extending away from the machine tool at an angle of less than 90° to the longitudinal axis of the machine tool.

6. A measuring arrangement according to claim 5, characterised in that the disk space is inclined at an angle which is smaller than 45° and which is preferably between 75° and 45°.

7. A measuring arrangement according to one of the preceding claims, characterised in that the measuring electrode is formed as a cut-off member (26), which is fixed to the thermal machine tool (1, 2) to its end facing the workpiece (3) and in that the cut-off member is insulated with respect to the machine tool and/or the machine tool is insulated with respect to earth and is arranged with a small capacitance.

8. A measuring arrangement according to claim 7, characterised in that the cut-off member, (26) is provided with an insulating intermediate member (27) which is fixable to the machine tool (1, 2).

9. A measuring arrangement according to claim 8, characterised in that the insulating intermediate member (27) is a ceramics component.

Fig. 1

Fig. 2

Fig. 3

Fig. 4

Fig. 6

Fig. 5